(19) Europäisches Patentamt
European Patent Office
Office européen des brevets

(11) EP 3 688 059 B1

(12) **EUROPÄISCHE PATENTSCHRIFT**

(45) Veröffentlichungstag und Bekanntmachung des Hinweises auf die Patenterteilung:
**10.11.2021 Patentblatt 2021/45**

(21) Anmeldenummer: **18769728.9**

(22) Anmeldetag: **20.09.2018**

(51) Int Cl.:
***C08G 18/76*** *(2006.01)* ***C08G 59/40*** *(2006.01)*
***C08L 75/04*** *(2006.01)*

(86) Internationale Anmeldenummer:
**PCT/EP2018/075402**

(87) Internationale Veröffentlichungsnummer:
**WO 2019/063391 (04.04.2019 Gazette 2019/14)**

(54) **THERMOPLASTISCHE POLYOXAZOLIDONE AUS DIISOCYANTEN UND DIGLYCIDYLETHER VON 2-PHENYL-1,3-PROPANDIOL-DERIVATEN**

THERMOPLASTIC POLYOXAZOLIDONES FROM DIISOCYANATES AND DIGLYCIDYLETHER OF 2-PHENYL-1,3-PROPANDIOL-DERIVATIVES

POLYOXAZOLIDONES THERMOPLASTIQUES EN DIISOCYANTES ET ÉTHERS DIGLYCIDYLIQUES DES DÉRIVÉS DE 2-PHÉNYL-1,3-PROPANEDIOL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.09.2017 EP 17194083**

(43) Veröffentlichungstag der Anmeldung:
**05.08.2020 Patentblatt 2020/32**

(73) Patentinhaber: **BASF SE**
**67056 Ludwigshafen am Rhein (DE)**

(72) Erfinder:
- **GORMAN, Irene**
  **67056 Ludwigshafen (DE)**
- **STEGMANN, Veit**
  **67056 Ludwigshafen (DE)**
- **THOMAS, Hans-Josef**
  **67056 Ludwigshafen (DE)**

(74) Vertreter: **BASF IP Association**
**BASF SE**
**GBI-C006**
**67056 Ludwigshafen (DE)**

(56) Entgegenhaltungen:
**WO-A1-2014/072216 US-A1- 2015 073 115**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft Verfahren zur katalytischen Herstellung von Polyoxazolidonen aus aromatischen Diisocyanten und 2-Phenyl-1,3-propandiol-Diglycidylether-Derivaten, sowie die entsprechenden Polyoxazolidone und deren Verwendung als thermoplastische Kunststoffe.

Die katalytische Herstellung von Polyoxazolidonen auf Basis von Diisocyanat- und DiepoxidVerbindungen (Diisocyanate und Diepoxide) ist grundsätzlich bekannt (WO 86/06734, US 3687897, WO 2015/173111, DE 10 2014 226 838, WO 2015/173110). Durch die Wahl geeigneter Katalysatoren lassen sich mit hoher Selektivität lineare Polyoxazolidonen herstellen, die als Thermoplasten verwendet werden können. Eine unerwünschte Nebenreaktion ist die Trimerisierung der Isocyanate unter Ausbildung von Isocyanurat-Strukturen. Diese Nebenreaktion führt zu verzweigten Polymeren und somit zum Verlust der thermoplastischen Eigenschaften.

Üblicherweise werden für die Herstellung von Polyoxazolidonen Diepoxide mit einer aromatischen Grundstruktur, wie beispielsweise Bisphenol-A-Diglycidylether, verwendet. Nachteiliger Weise sind die damit erhaltenen Polyoxazolidone spröde und weisen eine vergleichsweise hohe Schmelzviskosität auf, was zu Problemen bei der Verarbeitung von thermoplastischen Polyoxazolidonen führt. Der Einsatz von Diepoxiden mit aliphatischem Grundgerüst wiederum, wie er beispielsweise in US3687897 oder US2015/073115 (dort für die Herstellung von Oxazolidon-Ring enthaltenden Addukten) erwähnt ist, führt zu Polyoxazolidonen mit nur geringer Glasübergangstemperatur.

Der vorliegenden Erfindung lag die Aufgabe zugrunde, lineare thermoplastische Polyoxazolidone mit einer niedrigen Schmelzviskosität bei gleichzeitig vergleichsweise hoher Glasübergangstemperatur, bzw. ein Verfahren zu deren Herstellung, bereitzustellen. Vorzugsweise haben solche thermoplastischen Polyoxazolidone auch gute elektrische Isolierungseigenschaften und eine vergleichsweise geringe Sprödigkeit.

Entsprechend betrifft die vorliegende Erfindung ein Verfahren zur Herstellung eines thermoplastischen Polyoxazolidons durch katalytische Reaktion (Polyaddition) von einem oder mehreren aromatischen Diisocyanaten und einem oder mehreren Diepoxiden, wobei es sich bei den ein oder mehreren Diepoxiden ganz oder teilweise um 2-Phenyl-1,3-propandiol-Diglycidylether-Derivate (PPD-DGE-Derivate) handelt.

Darüber hinaus betrifft die vorliegende Erfindung ein thermoplastisches Polyoxazolidon, das erhältlich ist gemäß dem erfindungsgemäßen Verfahren. Vorzugsweise weisen die erfindungsgemäßen thermoplastischen Polyoxazolidone ein zahlenmittleres Molekulargewicht ($M_n$) von mindestens 2000 g/mol, besonders bevorzugt von mindestens 2500 g/mol auf, wobei das zahlenmittlere Molekulargewicht ($M_n$) mittels Gelpermeationschromatographie bestimmt wird.

In einer besonderen Ausführungsform des erfindungsgemäßen Verfahrens bzw. des erfindungsgemäßen thermoplastischen Polyoxazolidons, sind die ein oder mehreren Diepoxide zu mindestens 70 Gew.-%, vorzugsweise zu mindestens 80 Gew.-%, besonders bevorzugt zu mindestens 90 Gew.-%, und ganz besonders bevorzugt zu 100 Gew.-% 2-Phenyl-1,3-propandiol-Diglycidylether-Derivate. Das heißt, in dieser besonderen Ausführungsform werden maximal 30 Gew.-%, vorzugsweise maximal 20 Gew.-%, besonders bevorzugt maximal 10 Gew.-% und ganz besonders bevorzugt keine anderen Diepoxide, wie beispielsweise Bisphenol-A-Diglycidylether, eingesetzt.

In einer bevorzugten Ausführungsform des erfindungsgemäßen Verfahrens bzw. des erfindungsgemäßen thermoplastischen Polyoxazolidons werden als Diepoxide neben ein oder mehreren 2-Phenyl-1,3-propandiol-Diglycidylether-Derivaten noch ein oder mehrere Diglycidylether aromatischer Diole eingesetzt. Aromatische Diole im Sinne dieser Erfindung sind Diole bei denen beide OH-Funktionen an C-Atomen gebunden sind, die Teil eines oder verschiedener aromatischer Systeme sind. Vorzugsweise sind diese Diglycidylether aromatischer Diole ausgewählt aus der Gruppe bestehend aus Bisphenol-A-Diglycidylether und Bisphenol-F-Diglycidylether. Vorzugsweise ist in dieser besonderen Ausführungsform das Gewichtsverhältnis von 2-Phenyl-1,3-propandiol-Diglycidylether-Derivaten zu Diglycidylether aromatischer Diole im Bereich von 5:95 bis 95:5, besonders bevorzugt im Bereich von 5:95 bis 75:25, ganz besonders bevorzugt im Bereich von 10:90 bis 70:30, und insbesondere im Bereich von 20:80 bis 60:40.

Vorzugsweise handelt es sich bei den 2-Phenyl-1,3-propandiol-Diglycidylether-Derivaten um 2-Phenyl-1,3-propandiol-Diglycidylether-Derivate der Formel I

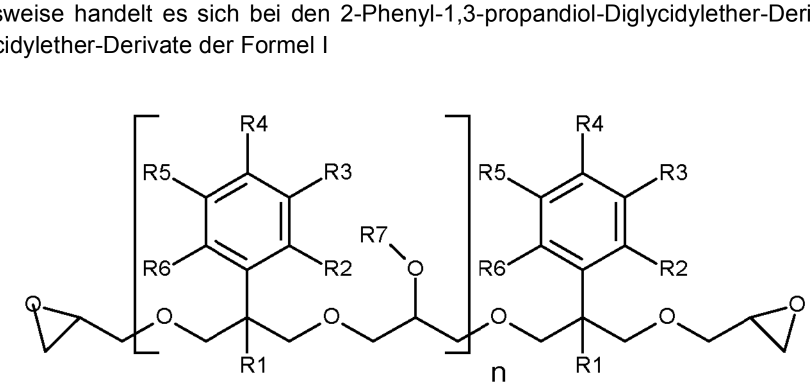

(I),

wobei

R1 eine Alkyl-Gruppe oder eine Aryl-Gruppe, bevorzugt eine Alkyl-Gruppe mit 1 bis 5 C-Atomen oder eine Aryl-Gruppe mit 6 bis 10 C-Atomen, besonders bevorzugt eine Methyl-Gruppe ist,
R2 bis R6 unabhängig voneinander ein Wasserstoff-Atom, eine Alkyl-Gruppe mit 1 bis 4 C-Atomen, ein Halogen-Atom (F, Cl, Br, I) oder eine Nitro-Gruppe, bevorzugt ein Wasserstoff-Atom oder eine Alkyl-Gruppe mit 1 bis 4 C-Atomen sind,
R7 ein Wasserstoff-Atom oder eine Glycidyl-Gruppe ist, und
n = 0 bis 100, vorzugsweise 0 bis 30 ist,
und wobei alternativ R2 und R3 oder R3 und R4 auch jeweils gemeinsam, zusammen mit dem Benzolring, an dem sie gebunden sind, einen annellierten Aromaten bzw. Heteroaromaten ergeben können, so dass z.B. insgesamt, zusammen mit diesem Benzolring, ein Naphthyl- oder Indolylsubstituent resultiert.

Besonders bevorzugt sind PPD-DGE-Derivate der Formel I, bei denen

R1 eine Alkyl-Gruppe oder eine Aryl-Gruppe, bevorzugt eine Alkyl-Gruppe mit 1 bis 5 C-Atomen oder eine Aryl-Gruppe mit 6 bis 10 C-Atomen, besonders bevorzugt eine Methyl-Gruppe ist,
R2 bis R6 unabhängig voneinander ein Wasserstoff-Atom, eine Alkyl-Gruppe mit 1 bis 4 C-Atomen, ein Halogen-Atom (F, Cl, Br, I) oder eine Nitro-Guppe, bevorzugt ein Wasserstoff-Atom oder eine Alkyl-Gruppe mit 1 bis 4 C-Atomen sind,
R7 ein Wasserstoff-Atom oder eine Glycidyl-Gruppe ist, und
n = 0 bis 100, vorzugsweise 0 bis 30 ist.

Bei PPD-DGE-Derivaten der Formel I, die zwei oder mehr R7-Reste aufweisen (n = 2 bis 100) ist R7 jeweils unabhängig voneinander ein Wasserstoff-Atom oder eine Glycidyl-Gruppe.

Alkyl-Gruppen im Sinne der Erfindung besitzen 1 bis 20 C-Atome. Sie können linear, verzweigt oder cyclisch sein. Bevorzugt weisen sie keine Substituenten mit Heteroatomen auf. Heteroatome sind alle Atome außer C- und H-Atome.

Aryl-Gruppen im Sinne der Erfindung besitzen 6 bis 20 C-Atome. Bevorzugt weisen sie keine Substituenten mit Heteroatomen auf. Heteroatome sind alle Atome außer C- und H-Atome.

In einer besonderen Ausführungsform der Erfindung handelt es sich bei dem 2-Phenyl-1,3-propandiol-Diglycidylether-Derivat um ein oligomeres PPD-DGE-Derivat der Formel I, bei dem n = 1 bis 100, vorzugsweise 1 bis 30 ist. Unter einem oligomerem PPD-DGE-Derivat der Formel I im Sinne der Erfindung ist auch ein Gemisch von oligomeren PPD-DGE-Derivaten mit verschiedenen n und unterschiedlichen Substitutionsmustern für R7 (Wasserstoff-Atom oder Glycidyl-Gruppe) zu verstehen.

In einer weiteren besonderen Ausführungsform der Erfindung handelt es sich bei dem 2-Phenyl-1,3-propandiol-Diglycidylether-Derivat um ein monomeres PPD-DGE-Derivat der Formel I mit n = 0.

In einer weiteren Ausführungsform der Erfindung handelt es sich bei dem 2-Phenyl-1,3-propandiol-Diglycidylether-Derivat um ein Gemisch aus monomeren und oligomeren PPD-DGE-Derivaten der Formel I.

In einer besonderen Ausführungsform der Erfindung ist das 2-Phenyl-1,3-propandiol-Diglycidylether-Derivat ein 2-Phenyl-1,3-propandiol-Diglycidylether-Derivat der Formel I, bei dem R1 eine Alkyl-Gruppe mit 1 bis 4 C-Atomen, bevorzugt eine Methyl-Gruppe ist und R2 bis R7 und n wie oben definiert sind. Besonders bevorzugt sind 2-Phenyl-1,3-propandiol-Diglycidylether-Derivate der Formel I, bei denen R1 eine Alkyl-Gruppe mit 1 bis 4 C-Atomen, bevorzugt eine Methyl-Gruppe und R2 bis R6 je ein Wasserstoff-Atom sind, n = 0 bis 100, bevorzugt 0 bis 30 ist, und R7 wie oben definiert ist (monomerer bzw. oligomere 2-Alkyl-2-phenyl-1,3-propandiol-Diglycidylether bzw. momerer bzw. oligomere 2-Methyl-2-phenyl-1,3-propandiol-Diglycidylether).

In einer besonders bevorzugten Ausführungsform der Erfindung ist das 2-Phenyl-1,3-propandiol-Diglycidylether-Derivat monomeres 2-Methyl-2-phenyl-1,3-propandiol-Diglycidylether (MPPD-DGE) entsprechend der Formel I, bei dem R1 eine Methyl-Gruppe und R2 bis R6 je ein Wasserstoff-Atom sind, und n = 0 ist, sowie oligomeres MPPD-DGE entsprechend der Formel I, bei dem R1 eine Methyl-Gruppe und R2 bis R6 je ein Wasserstoff-Atom sind, n = 1 bis 100, bevorzugt 1 bis 30 ist und R7 ein Wasserstoff-Atom oder eine Glycidyl-Gruppe (unabhängig voneinander) ist, sowie Gemische von monomerem und oligomeren MPPD-DGE.

Die Herstellung von erfindungsgemäßem PPD-DGE-Derivat ist in WO 2014/072216 beschrieben.

Das Epoxidäquivalentgewicht (EEW) des erfindungsgemäßem PPD-DGE-Derivat liegt vorzugsweise zwischen 139 und 500, insbesondere zwischen 140 und 200. Das Epoxidäquivalentgewicht einer Epoxidverbindung ist dabei als diejenige Menge der Substanz (in Gramm) definiert, welche 1 Mol Oxiranringe enthält.

Aromatische Diisocyanate im Sinne der Erfindung sind Diisocyantate mit einem aromatischen Grundgerüst. Es ist bevorzugt, aber nicht zwingend erforderlich, dass die Isocyanatgruppen direkt an einem C-Atom des aromatischen

Systems gebunden sind. Vorliegend wird als aromatisches Diisocyanat sowohl eine einzige Substanz als auch eine Mischung von Substanzen verstanden.

Bei dem erfindungsgemäßen aromatischem Diisocyanat handelt es sich vorzugsweise um eine oder mehrere Verbindungen ausgewählt es der Gruppe bestehend aus 2,2'-Diphenylmethandiisocyanat (2,2'-MDI), 2,4'-Diphenylmethandiisocyanat (2,4'-MDI), 4,4'-Diphenylmethandiisocyanat (4,4'-MDI), 1,5-Naphthylendiisocyanat (1,5-NDI), 2,4-Toluylendiisocyanat (2,4-TDI), 2,6-Toluylendiisocyanat (2,6-TDI), Diphenylmethandiisocyanat, 3,3'-Dimethyl-diphenyldiisocyanat, 1,2-Diphenylethandiisocyanat, 2,4-Paraphenylendiisocynat (PPDI) und 2,4-Tetramethylenxylendiisocyant (TMXDI). Besonders bevorzugt sind die aromatischen Diisocyanate, ausgewählt aus der Gruppe bestehend aus Toluylendiisocyanat (2,4-TDI), 2,6-Toluylendiisocyanat (2,6-TDI), Diphenylmethandiisocyanat (2,2'-MDI), 2,4'-Diphenylmethandiisocyanat (2,4'-MDI) und 4,4'-Diphenylmethandiisocyanat (4,4'-MDI).

In einer besonderen Ausführungsform des erfindungsgemäßen Verfahrens können dem Reaktionsgemisch für die katalytischen Herstellung von Polyoxazolidonen, neben den aromatischen Diisocyanaten, auch noch aromatische Monoisocyanate zugesetzt werden. Vorzugsweise handelt es sich bei diesen Monoisocyanaten um 1-Naphthyl-Isocyanat oder 2-Naphthyl-Isocyanat. Vorzugsweise werden die Monoisocyanate in einem Anteil von bis maximal 8 Mol-%, bevorzugt von 0,1 bis 6 Mol-%, besonders bevorzugt von 0,2 bis 5 Mol-%, bezogen auf die Gesamtmenge der aromatischen Diisocyanate, eingesetzt. Vorzugsweise werden die Monoisocyanate in einem Anteil von 0,1 bis 10 Mol-%, bevorzugt von 1 bis 8 Mol-%, besonders bevorzugt von 2 bis 6 Mol-%, bezogen auf die Gesamtmenge der Diepoxide, eingesetzt. Monoisocyanate werden als Endgruppenverschluss zur Verbesserung der Schmelzstabilität und als Kettenlängenregulator eingesetzt.

Für die selektive Herstellung von lineare Polyoxazolidonen sind in der Literatur eine Vielzahl von geeigneten Katalysatoren bekannt. Übliche Katalysatoren für das erfindungsgemäße Verfahren zur Herstellung von lineare Polyoxazolidonen sind Alkalihalogenide wie beispielsweise Lithiumbromid, tertiäre Amine, quartäre Ammoniumsalze wie beispielsweise Tetraalkylammoniumhalogenide, Harnstoffverbindungen, wie beispielsweise N,N"-(4-Methyl-m-phenylen)bis[N',N'dimethylharnstoff] (Dyhard UR500), Piperidinium-Verbidungen wie beispielsweise 1-Butyl-1methylpiperidinium-Chlorid (BMPM-Cl), Imidazolium-Verbindungen wie beispielsweise 1-Ethyl-3-methylimidazolium-Bromid (EMIM-Br), 1-Ethyl-3-methylimidazolium Chlorid (EMIM-Cl), 1-Ethyl-3-methylimidazolium dicyandiamide (EMIM-DICY), 1-Ethyl-3-methylimidazolium Iodid (EMIM-I), 1-Ethyl-2,3-methylimidazolium Bromide (EDMIM-Br), 1-Ethyl-3-methylimidazolium Diethylphosphat (EMIM-DEP) oder 1-Benzyl-3-methylimidazolium Chlorid (BEMIM-Cl), Phosphonium-Verbindungen, wie beispielsweise Tetraalkylphosphoniumhalogenide oder Tetraalkylphsophoniumhydroxide, Lewis-Säuren wie beispielsweise Aluminiumchlorid oder Komplexe von Lewis-Säuren mit Lewis-Basen. Die Katalysatoren werden einzeln oder in Kombination eingesetzt. In besonderen Ausführungsformen des Verfahrens werden primäre oder sekundäre aliphatische Alkohole als zusätzliche Co-Katalysatoren eingesetzt.

Die katalytische Reaktion (Polyaddition) bei dem erfindungsgemäßen Verfahren zur Herstellung eines thermoplastischen Polyoxazolidons erfolgt vorzugsweise bei einer Temperatur im Bereich von 140 °C bis 240 °C. Bei Polyadditionen in Lösungsmitteln liegt der bevorzugte Temperaturbereich insbesondere bei 140 °C bis 220 °C, weiter bevorzugt bei 150 °C bis 200 °C und besonders bevorzugt bei 160 °C bis 180 °C, und bei Polyadditionen, die lösungsmittelfrei in der Schmelze durchgeführt werden, liegt der bevorzugte Temperaturbereich insbesondere bei 150 °C bis 240 °C, weiter bevorzugt bei 150 °C bis 230 °C und besonders bevorzugt bei 155 °C bis 225 °C.

In besonderen Ausführungsformen des erfindungsgemäßen Verfahrens zur Herstellung von linearen Polyoxazolidonen werden in der Reaktionsmischung zusätzliche weitere Additive wie beispielsweise Füllstoffe, Fasern, Antioxidanzien, Trennungsmittel, Pigmente, Tenside, Treibmittel oder Antischaummittel in üblicher Weise und üblichen Mengen eingesetzt.

Das erfindungsgemäße Verfahrens zur Herstellung von linearen Polyoxazolidonen kann lösungsmittelfrei in der Schmelze der Edukte oder in einem Lösungsmittel durchgeführt werden.

In einer besonderen Ausführungsform des erfindungsgemäßen Verfahrens zur Herstellung von linearen Polyoxazolidonen wird in einem ersten Schritt das Diepoxid und der Katalysator gemischt oder in einem Lösungsmittel gelöst, und auf Reaktionstemperatur erhitzt. Die Mischung bzw. die Lösung wird vorzugsweise mit Stickstoff inertisiert, Sauerstoff muss bei der Reaktion ausgeschlossen werden. Dann wird das Diisocyanat vorzugsweise unter Aufrechterhaltung der Reaktionstemperatur langsam zudosiert. Die Reaktionstemperatur liegt bevorzugt in einem Bereich von 140 °C bis 240 °C. Bei Polyadditionen in Lösungsmitteln liegt der bevorzugte Temperaturbereich insbesondere bei 140 °C bis 220 °C, weiter bevorzugt bei 150 °C bis 200 °C und besonders bevorzugt bei 160 °C bis 180 °C, und bei Polyadditionen, die lösungsmittelfrei in der Schmelze durchgeführt werden, liegt der bevorzugte Temperaturbereich insbesondere bei 150 °C bis 240 °C, weiter bevorzugt bei 150 °C bis 230 °C und besonders bevorzugt bei 155 °C bis 225 °C.

Der Gehalt an freiem Diisocyanat in der Reaktionsmischung sollte so gering wie möglich gehalten werden, um die Trimerisierung des Diisocyanats zu verhindern. Dies wird entweder über die Geschwindigkeit der Zudosierung des Diisocyanats und/oder die Reaktivität, das heißt die Menge des zugesetzten Katalysators gesteuert.

In einer weiteren besonderen Ausführungsform des erfindungsgemäßen Verfahrens zur Herstellung von linearen Polyoxazolidonen wird der Katalysator in einem ersten Schritt in einem Lösungsmittel gelöst und auf Reaktionstemperatur erhitzt. Dann wird in einem zweiten Schritt eine Mischung aus dem Diisocyanat und dem Diepoxid, vorzugsweise gelöst in einem Lösungsmittel, vorzugsweise unter Aufrechterhaltung der Reaktionstemperatur, langsam zudosiert. Die Dosiergeschwindigkeit erfolgt in Abhängigkeit der Reaktionsgeschwindigkeit des eingesetzten Diisocyanats und Diepoxids, so dass deren Gehalt in der Reaktionsmischung so gering wie möglich gehalten wird, um die Trimerisierung des Diisocyanats zu verhindern. Die Reaktionstemperatur liegt bevorzugt in einem Bereich von 140 °C bis 220 °C, weiter bevorzugt bei 150 °C bis 200 °C und besonders bevorzugt bei 160 °C bis 180 °C.

Das Polymer in der Reaktionsmischung wird vorzugsweise nach vollständiger Umsetzung (erkennbar bspw. mittels IR-Spektroskopie an der Abnahme des NCO-Peaks) durch Eintropfen in ein Gemisch aus Wasser und Ethanol (bspw. 20 : 80 Gewichtsteile) ausgefällt. Der Feststoff kann dann abfiltriert, mit warmem Wasser (bspw. 50 °C) und anschließend mit Ethanol gewaschen und schließlich, bspw. unter Vakuum, bis zur Massenkonstanz getrocknet werden.

In einer bevorzugten Ausführungsform ist der Wassergehalt der Reaktionsmischung bei den erfindungsgemäßen Herstellungsverfahren kleiner als 0,1 Gew.-%. So wird die Nebenreaktion des Diisocyanats zu Harnstoff bzw. Harnstoffderivaten verhindert.

Das Molverhältnis der Epoxidgruppen zu den Isocyanatgruppen, der bei dem erfindungsgemäßen Verfahren eingesetzten Diepoxide und Isocyanate (Diisocyanate und ggf. eingesetzte Monoisocyanate) liegt vorzugsweise in einem Bereich zwischen 2,0 : 1,0 bis 1,0 : 1,05, bevorzugt zwischen 1,2 : 1,0 bis 1,0 : 1,05 und besonders bevorzugt zwischen 1,1 : 1,0 bis 1,0 : 1,01.

Die Katalysatorkonzentration beträgt üblicherweise 0,05 Mol-% bis 5,0 Mol-% bezogen auf die Epoxidgruppen, bevorzugt 0,05 Mol-% bis 1 Mol-% und besonders bevorzugt 0,05 Mol-% bis 0,5 Mol-%.

Die Lösungsmittel werden bevorzugt vor ihrer Verwendung getrocknet. In einer bevorzugten Ausführungsform erfolgt die Trocknung durch ein Molekularsieb.

Als Lösungsmittel für die erfindungsgemäßen Herstellungsverfahren können beispielsweise eingesetzt werden N-Methyl-2-pyrrolidon (NMP), 1,2-Dichlorbenzol, Milchsäuredimethylamid oder Tetrahydrothiophen-1,1-dioxid. Ein besonders geeignetes Lösungsmittel ist Tetrahydrothiophen-1,1-dioxid (Sulfolan).

Die vorliegende Erfindung betrifft auch die Verwendung des erfindungsgemäßen thermoplastisches Polyoxazolidons zur Herstellung von Anwendungen ausgewählt aus Beschichtung, Folie, Schaum (durch zusätzliches Schäumen der Zubereitung), elektrische Isolierung (wie bspw. Kabelummantelungen), Laminat, Faser, Formkörper und Modifizierer für thermoplastische Materialien (d.h. Substanzen, die die Eigenschaften eines anderen Materials beeinflussen). Jede dieser Verwendungen für sich genommen ist eine bevorzugte Ausführungsform, die auch als Anwendung bezeichnet wird. Das thermoplastische Polyoxazolidon wird dafür bevorzugt in einem ersten Schritt als Granulat oder Pulver bereitgestellt. Die Anwendungen werden daraus bevorzugt durch Spritzguss, Kalandrieren, Pulversintern, Lasersintern (3D-Druck) oder Extrusion hergestellt.

Die Schmelzviskosität ist eine wichtige Verarbeitungseigenschaft von Thermoplasten. Unter der Schmelzviskosität im Sinne dieser Erfindung wird die Viskosität der Schmelze verstanden, die bei einer bestimmten Temperatur oberhalb der Schmelztemperatur gemessen wird. Für die Herstellung von bspw. Formkörpern oder Beschichtungen muss das Material in der Schmelze gut fließen, dies erfordert bei Kunststoffen mit hohen Glasübergangstemperaturen in der Regel sehr hohe Temperaturen zur Erzielung einer günstigen Schmelzviskosität. Dadurch können evtl. Nebenreaktionen wie Nachvernetzung, welche zur Erhöhung der Schmelzviskosität führt, oder Spaltung der Polymerketten, welche zur Erniedrigung der Schmelzviskosität führt, initiiert werden. Eine niedrigere Schmelzviskosität bei gegebener Verarbeitungstemperatur bzw. das Erreichen einer für die Verarbeitung geeigneten Schmelzviskosität bei vergleichsweise geringer Temperatur, ist somit günstig für die Verarbeitung und Stabilität der Polymere im Verarbeitungsprozess. Die Schmelzviskosität wird durch etablierte rheologische Methoden bestimmt, bspw. mittels frequenzabhängiger Scherdeformation in einem oszillierenden Platte-Platte-Rheometer.

Die Glasübergangstemperatur (Tg) kann mit einem Differential Kalorimeter (DSC), beispielsweise gemäß der Norm ASTM D 3418, bestimmt werden. Dazu wird eine sehr kleine Probenmenge (ca. 10 mg) in einem Aluminiumtiegel erwärmt und der Wärmestrom zu einem Referenztiegel gemessen. Die Auswertung der Tg-Stufe der Wärmestromkurve kann über den Wendepunkt, nach der halben Breite oder dem Verfahren der Mittelpunktstemperatur bestimmt werden.

Die folgenden Beispiele zeigen an beispielhaft die vorteilhafte Eigenschaft der Katalysatoren sowie deren Einsatz in einem erfindungsgemäßen Polymer. Die Beispiele sind in keiner Weise einschränkend für den Erfindungsgedanken.

Beispiele:

Verwendete Substanzen:

Einsatzstoffe:

- BADGE (Bisphenol-A-Diglycidylether), Sigma-Aldrich, EEW: 174,7
- MPPD-DGE (2-Phenyl-2-methyl-1,3-propandiol-Diglycidylether), hergestellt gemäß WO2014/072216, Beispiel 1

- NPG-DGE (Neopentylglycol-Diglycidylether), Sigma-Aldrich
- 2,4-TDI (2,4-Toloyldiisocyanat), Sigma-Aldrich, IEW (isocyanate equivalent weight in gramms): 87,1
- 4.4'-MDI (4,4'-Methylenebis(phenyl isocyanate)), Sigma-Aldrich, IEW: 125,1
- 1-Naphthyl-Isocyanat, Sigma-Aldrich, IEW: 169,2

Katalysatoren:

- BMPM-Cl (1-Butyl-1methylpiperidinium-Chlorid), Fa. Iolitec
- EMIM-Br (1-Ethyl-3-methylimidazolium-Bromid), Fa. Iolitec
- UR500 (N,N"-(4-Methyl-m-phenylen)bis[N',N'-dimethylharnstoff]), Alzchem (DYHARD® UR500)

Lösungsmittel:

- Sulfolan, Merck, getrocknet über Molekularsieb 4Å (Roth, Perlform)
- MTBE (Methyl-tert.-butylether), Sigma -Aldrich
- DMAC (N,N-Dimethylacetamid), Merck

Bestimmung der Polymer-Kenndaten:

- Die Chemoselektivität der Reaktion in Hinblick auf die Oxazolidon-Bildung wurde mittels Infrarotspektroskopie (Nicolet 380 FT-IR-Spektrometer mit ATR-Kristall mit Software Omnic von Thermo-Fischer) und Bestimmung der für Oxazolidon (Ox, 1750 $cm^{-1}$) und Isocyanurat (trimer, 1705 $cm^{-1}$) spezifischen IR-Banden gemäß der Formel

$$R_{ox/trimer} = \text{IR-Bande}_{ox} / (\text{IR-Bande}_{ox} + \text{IR-Bande}_{trimer})$$

  ermittelt.
- Die Glasübergangstemperatur (Tg) wurde mittels Differential Kalorimeter (DSC; DSC-Anlage (Q2000) von Texas Instruments mit der Software Universal V4.7A von Texas Instruments) gemäß der Norm ASTM D 3418 an jeweils ca. 7 — 10 mg Proben gemessen. Dabei wurde das folgende Temperaturprofil gefahren: 1. Lauf: 20-180 °C bei 5 K/min und 2. Lauf: 0-300 °C bei 20 K/min. Die Tg-Bestimmung erfolgte jeweils beim 2. Lauf.
- Das mittlere Polymergewicht (Gewichtsmittel Mw bzw. Zahlenmittel Mn) wurde mittels Gelpermeationschromatographie (GPC; 4x 60 cm Phenomenex-Säulen, Porengröße: 1000-10000-10000-1000 Å, Packung: Polymethylmethacrylat (PMMA), Flussrate: 0,7 ml/min, Detektor: Brechungsindex) bei Raumtemperatur (22 °C) bestimmt. Dazu wurden jeweils Proben von 100 µl Polymerlösung injiziert. Als Lösungs- und Laufmittel diente DMAC. Die Auswertung der Polymersignale erfolgte im Bereich der Retentionszeiten von 60 bis 120 min. Kalibriert wurde mit PMMA.
- Die Schmelzviskosität ($\eta_m$) der Polymerschmelzen wurde mit einem Rheometer (Typ DHR-2, TA-Instruments) mit einer Platte-Platte-Messvorrichtung (25 mm Durchmesser für die Platten) mittels oszillatorischen Messungen bei einer Messtemperatur von 150 °C bzw. 180 °C bestimmt. Dazu wurde die Probe auf die untere beheizte Platte appliziert und bei Erreichen der Messtemperatur für 90 s equilibriert. Die Schmelzviskosität wurde während eines Frequenzdurchlaufs, bei dem eine Deformation von 1 % bei Frequenzen zwischen 100 und 0,1 rad/s (abwärts) durchlaufen wurden, beim Erreichen der Frequenz von 1 rad/s (Bsp. 1 und Vergl.-Bsp. 1 und 2) bzw. 0,5 rad/s (Bsp. 2 und Vergl.-Bsp. 3 und 4) bestimmt.

Beispiel 1: Polyoxazolidone aus 2,4-TDI und MPPD-DGE/BADGE-Gemisch (50:50); Polyaddition in Lösungsmittel

In einem mit trockenem Stickstoff inertisierten 100 ml Dreihals-Rundkolben, ausgestattet mit Magnetrührer, Kühler, Thermofühler und Septum, wurden 7,54 g MPPD-DGE (EEW: 157,7), 7,54 g BADGE, 43,5 mg EMIM-Br und 12,0 mg UR500 eingewogen und in 53,66 g Sulfolan gelöst. Die Lösung wurde unter $N_2$-Spülung auf 160 °C erhitzt. In 60 min wurden mittels Spritzenpumpe/Kanüle 7,86 g 2,4-TDI kontinuierlich unter Rühren zudosiert. Nach vollständiger Zugabe wurden in regelmäßigen Abständen Proben mittels Spritze entnommen und im IR untersucht.

Nach vollständiger Umsetzung des Isocyanates (nach 30 min), erkennbar an der Abnahme der IR-Bande bei 2256 $cm^{-}1$, wurde eine weitere Stunde bei Reaktionstemperatur gerührt, dann die Lösung auf ca. 50 °C abgekühlt und langsam unter kräftigem Rühren in 400 ml Ethanol/WasserGemisch (80/20 v/v) gegeben. Dabei fiel das gebildete Polymer aus und konnte per Vakuumfiltration abgetrennt werden. Das Polymer wurde zweimal mit je 100 ml Ethanol gewaschen und anschließend unter Vakuum bei ca. 50 °C bis zur Massenkonstanz getrocknet. Die Kenndaten des resultierenden weißen, feinen Pulvers, welches in DMAC klar löslich war, sind in Tabelle 1 zusammengestellt.

Vergleichsbeispiel 1: Polyoxazolidone aus 2,4-TDI und BADGE; Polyaddition in Lösungsmittel

In einem mit trockenem Stickstoff inertisierten 100 ml Dreihals-Rundkolben, ausgestattet mit Magnetrührer, Kühler, Thermofühler und Septum, wurden 17,08 g BADGE, 46,7 mg EMIM-Br und 12,8 mg UR500 eingewogen und in 59,7 g Sulfolan gelöst. Die Lösung wurde unter $N_2$-Spülung auf 160 °C erhitzt. In 60 min wurden mittels Spritzenpumpe/Kanüle 8,45 g 2,4-TDI kontinuierlich unter Rühren zudosiert. Nach vollständiger Zugabe wurden in regelmäßigen Abständen Proben mittels Spritze entnommen und im IR untersucht. Nach vollständiger Umsetzung des Isocyanates (nach 30 min), erkennbar an der Abnahme der IR-Bande bei 2256 $cm^{-1}$, wurde eine weitere Stunde bei Reaktionstemperatur gerührt, dann die Lösung auf ca. 50 °C abgekühlt und langsam unter kräftigem Rühren in 400 ml Ethanol/Wasser-Gemisch (80/20 v/v) gegeben. Dabei fiel das gebildete Polymer aus und konnte per Vakuumfiltration abgetrennt werden. Das Polymer wurde zweimal mit je 100 ml Ethanol gewaschen und anschließend unter Vakuum bei ca. 50 °C bis zur Massenkonstanz getrocknet. Die Kenndaten des resultierenden weißen, feinen Pulvers sind in Tabelle 1 zusammengestellt.

Vergleichsbeispiel 2: Polyoxazolidone aus 2,4-TDI und NPG-DGE/BADGE-Gemisch (50:50); Polyaddition in Lösungsmittel

In einem mit trockenem Stickstoff inertisierten 100 ml Dreihals-Rundkolben, ausgestattet mit Magnetrührer, Kühler, Thermofühler und Septum, wurden 7,83 g NPG-DGE (EEW: 143,8), 7,83 g BADGE, 47,4 mg EMIM-Br und 13,1 mg UR500 eingewogen und in 56,65 g Sulfolan gelöst. Die Lösung wurde unter $N_2$-Spülung auf 160 °C erhitzt. In 60 min wurden mittels Spritzenpumpe/Kanüle 8,56 g 2,4-TDI kontinuierlich unter Rühren zudosiert. Nach vollständiger Zugabe wurde eine Probe mittels Spritze entnommen und im IR untersucht. Die Umsetzung des Isocyanates war bereits unmittelbar nach dem Zudosieren vollständig, erkennbar an der Abnahme der IR-Bande bei 2256 $cm^{-1}$. Anschließend wurde eine weitere Stunde bei Reaktionstemperatur gerührt, dann die Lösung auf ca. 50 °C abgekühlt und langsam unter kräftigem Rühren in 400 ml Ethanol/Wasser-Gemisch (80/20 v/v) gegeben. Dabei fiel das gebildete Polymer aus und konnte per Vakuumfiltration abgetrennt werden. Das Polymer wurde zweimal mit je 100 ml Ethanol gewaschen und anschließend unter Vakuum bei ca. 50 °C bis zur Massenkonstanz getrocknet. Die Kenndaten des resultierenden weißen, feinen Pulvers, welches in DMAC klar löslich war, sind in Tabelle 1 zusammengestellt.

Tabelle 1: Kenndaten der 2,4-TDI-basierten Polyoxazolidone

| | Bsp. 1 | Vergl.-Bsp. 1 | Vergl.-Bsp. 2 |
|---|---|---|---|
| Mw (in g/mol) | 12583 | 35740 | 12799 |
| Mn (in g/mol) | 2746 | 8618 | 4612 |
| Tg (in °C) | 106 | 142 | 77,6 |
| $R_{ox/trimer}$ | 0,67 | 0,72 | 0,65 |
| $\eta_m$ bei 150°C (in Pas) | 285 | - | 241 |
| $\eta_m$ bei 180°C (in Pas) | - | 59139 | - |

Beispiel 2: Polyoxazolidone aus 4,4'-MDI und MPPD-DGE/BADGE-Gemisch (25:75); lösungsmittelfreie Polyaddition

In einen mit zwei Extruderschnecken ausgestatteten und auf 100 °C Außentemperatur geheizten Extruder (15mL Twin Screw Microcompounder MC 15 High Torque and High Force; Firma Xplore) wurde eine Mischung aus 3,04 g MPPD-DGE (destillativ gereinigt, EEW: 149), 9,13 g BADGE, 17,4 mg BMPM-Cl, die zuvor 3 h bei 80 °C unter Stickstoffatmosphäre mittels Magnetrührer gemischt wurde, gefüllt. Anschließend wurde unter Argon-Inertisierung und Rühren (100 U/min) die Außentemperatur des Extruders auf 160 °C erhöht und für 5 min belassen, sodass eine Innentemperatur von etwa 155 °C erreicht wurde. Danach wurde durch den Eingang der vorderen Verschlussplatte des Extruders über einen Zeitraum von 60 min mittels Spritzenpumpe/Kanüle die auf 70 °C temperierte Isocyanatmischung aus 8,92 g 4,4'-MDI und 0,25 g 1-Naphthyl-Isocyanat kontinuierlich zudosiert. Nach etwa 40 min ausgehend von dem Beginn der Isocyanat-Zugabe beginnt die Viskosität der Mischung im Extruder zu steigen. Daher wurde die Außentemperatur des Extruders 51 min nach Beginn der Zudosierung auf 190 °C, nach weiteren 9 min auf 210 °C und schließlich nach einer weiteren min auf 220 °C erhöht. 20 min nach Ende der Zudosierung wurde das entstandene Polyoxazolidon als Polymerstrang über den Ablasshahn des Extruders entnommen. Die Kenndaten des resultierenden Polyoxazolidons sind in Tabelle 2 zusammengestellt.

Vergleichsbeispiel 3: Polyoxazolidone aus 4,4'-MDI und BADGE; lösungsmittelfreie Polyaddition

In einen mit zwei Extruderschnecken ausgestatteten und auf 100 °C Außentemperatur geheizten Extruder (15mL Twin Screw Microcompounder MC 15 High Torque and High Force; Firma Xplore) wurde eine Mischung aus

12,21 g BADGE, 16,8 mg BMPM-Cl, die zuvor 3 h bei 80 °C unter Stickstoffatmosphäre mittels Magnetrührer gemischt wurde, gefüllt. Anschließend wurde unter Argon-Inertisierung und Rühren (100 U/min) die Außentemperatur des Extruders auf 160 °C erhöht und für 5 min belassen, sodass eine Innentemperatur von etwa 155 °C erreicht wurde. Danach wurde durch den Eingang der vorderen Verschlussplatte des Extruders über einen Zeitraum von 60 min mittels Spritzenpumpe/Kanüle die auf 70 °C temperierte Isocyanatmischung aus 8,57 g 4,4'-MDI und 0,24 g 1-Naphthyl-Isocyanat kontinuierlich zudosiert. Nach etwa 40 min ausgehend von dem Beginn der Isocyanat-Zugabe beginnt die Viskosität der Mischung im Extruder zu steigen. Daher wurde die Außentemperatur des Extruders 51 min nach Beginn der Zudosierung auf 190 °C, nach weiteren 9 min auf 210 °C und schließlich nach einer weiteren min auf 220 °C erhöht. 20 min nach Ende der Zudosierung wurde das entstandene Polyoxazolidon als Polymerstrang über den Ablasshahn des Extruders entnommen. Die Kenndaten des resultierenden Polyoxazolidons sind in Tabelle 2 zusammengestellt.

Vergleichsbeispiel 4: Polyoxazolidone aus 4,4'-MDI und NPG-DGE/BADGE-Gemisch (25:75); lösungsmittelfreie Polyaddition

In einen mit zwei Extruderschnecken ausgestatteten und auf 100 °C Außentemperatur geheizten Extruder (15mL Twin Screw Microcompounder MC 15 High Torque and High Force; Firma Xplore) wurde eine Mischung aus 2,92 g NPG-DGE (destillativ gereinigt, EEW: 112), 8,76 g BADGE, 18,3 mg BMPM-Cl, die zuvor 3 h bei 80 °C unter Stickstoffatmosphäre mittels Magnetrührer gemischt wurde, gefüllt. Anschließend wurde unter Argon-Inertisierung und Rühren (100 U/min) die Außentemperatur des Extruders auf 160 °C erhöht und für 5 min belassen, sodass eine Innentemperatur von etwa 155 °C erreicht wurde. Danach wurde durch den Eingang der vorderen Verschlussplatte des Extruders über einen Zeitraum von 60 min mittels Spritzenpumpe/Kanüle die auf 70 °C temperierte Isocyanatmischung aus 9,35 g 4,4'-MDI und 0,26 g 1-Naphthyl-Isocyanat kontinuierlich zudosiert. Nach etwa 40 min ausgehend von dem Beginn der Isocyanat-Zugabe beginnt die Viskosität der Mischung im Extruder zu steigen. Daher wurde die Außentemperatur des Extruders 51 min nach Beginn der Zudosierung auf 190 °C, nach weiteren 9 min auf 210 °C und schließlich nach einer weiteren min auf 220 °C erhöht. 20 min nach Ende der Zudosierung wurde das entstandene Polyoxazolidon als Polymerstrang über den Ablasshahn des Extruders entnommen. Die Kenndaten des resultierenden Polyoxazolidons sind in Tabelle 2 zusammengestellt.

Tabelle 2: Kenndaten der 4,4'-MDI-basierten Polyoxazolidone

| | Bsp. 2 | Vergl.-Bsp. 3 | Vergl.-Bsp. 4 |
|---|---|---|---|
| Mn (in g/mol) | 10359 | 13794 | 9807 |
| Mw (in g/mol) | 37045 | 48352 | 39635 |
| Tg (in °C) | 135 | 162 | 129 |
| R ox/trimer | 0,83 | 0,88 | 0,83 |
| $\eta_m$ bei 200°C (in Pas) | 12300 | 274000 | 13000 |
| $\eta_m$ bei 240°C (in Pas) | 588 | 7860 | 1070 |

**Patentansprüche**

**1.** Verfahren zur Herstellung eines thermoplastischen Polyoxazolidons durch katalytische Reaktion von einem oder mehreren aromatischen Diisocyanaten und einem oder mehreren Diexpoiden, wobei es sich bei den ein oder mehreren Diepoxiden ganz oder teilweise um 2-Phenyl-1,3-propandiol-Diglycidylether-Derivate handelt.

**2.** Das Verfahren gemäß Anspruch 1, wobei als Diepoxide neben ein oder mehreren 2-Phenyl-1,3-propandiol-Diglycidylether-Derivaten noch ein oder mehrere Diglycidylether aromatischer Diole eingesetzt werden.

**3.** Das Verfahren gemäß Anspruch 1, wobei die Diglycidylether aromatischer Diole ausgewählt sind aus der Gruppe bestehend aus Bisphenol-A-Diglycidylether und Bisphenol-F-Diglycidylether.

**4.** Das Verfahren gemäß Anspruch 2 oder 3, wobei das Gewichtsverhältnis von 2-Phenyl-1,3-propandiol-Diglycidylether-Derivaten zu Diglycidylether aromatischer Diole im Bereich von 5:95 bis 95:5 ist.

**5.** Das Verfahren gemäß einem der Ansprüche 1 bis 4, wobei die 2-Phenyl-1,3-propandiol-Diglycidylether-Derivate 2-Phenyl-1,3-propandiol-Diglycidylether-Derivate der Formel I

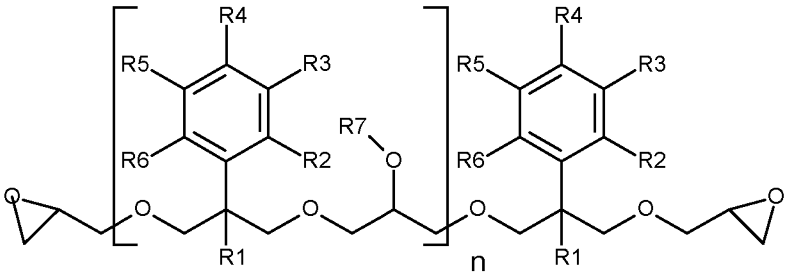

(I) ist,

bei denen

R1 eine Alkyl-Gruppe oder eine Aryl-Gruppe ist,
R2 bis R6 unabhängig voneinander ein Wasserstoff-Atom, eine Alkyl-Gruppe mit 1 bis 4 C-Atomen, ein Halogen-Atom oder eine Nitro-Gruppe sind,
R7 ein Wasserstoff-Atom oder eine Glycidyl-Gruppe ist, und
n = 0 bis 100 ist,
und alternativ R2 und R3 oder R3 und R4 auch jeweils gemeinsam, zusammen mit dem Benzolring, an dem sie gebunden sind, einen annellierten Aromaten bzw. Heteroaromaten ergeben können.

**6.** Das Verfahren gemäß Anspruch 5, wobei

R1 eine Alkyl-Gruppe mit 1 bis 5 C-Atomen oder eine Aryl-Gruppe mit 6 bis 10 C-Atomen ist,
R2 bis R6 unabhängig voneinander ein Wasserstoff-Atom oder eine Alkyl-Gruppe mit 1 bis 4 C-Atomen sind,
R7 ein Wasserstoff-Atom oder eine Glycidyl-Gruppe ist, und
n = 0 bis 30 ist.

**7.** Das Verfahren gemäß Anspruch 6, wobei

R1 eine Alkyl-Gruppe mit 1 bis 4 C-Atomen ist und
R2 bis R6 jeweils Wasserstoff-Atome sind.

**8.** Das Verfahren gemäß einem der Ansprüche 1 bis 7, wobei das aromatischem Diisocyanat ausgewählt ist aus der Gruppe bestehend aus 2,2'- Diphenylmethandiisocyanat, 2,4'-Diphenylmethandiisocyanat, 4,4'-Diphenylmethandiisocyanat, 1,5-Naphthylendiisocyanat, 2,4- Toluylendiisocyanat, 2,6-Toluylendiisocyanat, Diphenylmethandiisocyanat, 3,3'-Dimethyl-diphenyl-diisocyanat, 1,2-Diphenylethandiisocyanat, 2,4-Paraphenylendiisocynat und 2,4-Tetramethylenxylendiisocyant.

**9.** Das Verfahren gemäß einem der Ansprüche 1 bis 8, wobei die Umsetzung in Gegenwart eines Katalysators, ausgewählt aus der Gruppe bestehend aus Alkalihalogenide, tertiäre Amine, quartäre Ammoniumsalze, Harnstoffverbindungen, Piperidinium-Verbidungen, Imidazolium-Verbindungen, Phosphonium-Verbindungen, Lewis-Säuren und Komplexe von Lewis-Säuren mit Lewis-Basen, erfolgt.

**10.** Das Verfahren gemäß einem der Ansprüche 1 bis 9, wobei die Umsetzung bei einer Temperatur im Bereich von 140 °C bis 240 °C erfolgt.

**11.** Das Verfahren gemäß einem der Ansprüche 1 bis 10, wobei die Umsetzung in Gegenwart des Lösungsmittels Sulfolan erfolgt.

**12.** Das Verfahren gemäß einem der Ansprüche 1 bis 10, wobei die Umsetzung lösungsmittelfrei in der Schmelze erfolgt.

**13.** Thermoplastisches Polyoxazolidon, erhältlich gemäß dem Verfahren nach einem der Ansprüche 1 bis 12.

**14.** Verwendung des thermoplastischen Polyoxazolidons gemäß Anspruch 13 zur Herstellung von Anwendungen ausgewählt aus Beschichtung, Folie, Schaum, elektrische Isolierung, Laminat, Faser und Formkörper.

15. Verwendung des thermoplastischen Polyoxazolidons gemäß Anspruch 13 als Modifizierer für thermoplastische Materialien.

## Claims

1. A method for preparing a thermoplastic polyoxazolidone by catalytic reaction of one or more aromatic diisocyanates and one or more diepoxides, wherein the one or more diepoxides consist wholly or partly of 2-phenylpropane-1,3-diol diglycidyl ether derivatives.

2. The method according to claim 1, wherein one or more diglycidyl ethers of aromatic diols are used as diepoxides in addition to one or more 2-phenylpropane-1,3-diol diglycidyl ether derivatives.

3. The method according to claim 1, wherein the diglycidyl ethers of aromatic diols are selected from the group consisting of bisphenol A diglycidyl ether and bisphenol F diglycidyl ether.

4. The method according to claim 2 or 3, wherein the weight ratio of 2-phenylpropane-1,3-diol diglycidyl ether derivatives to diglycidyl ethers of aromatic diols is in the range from 5:95 to 95:5.

5. The method according to any of claims 1 to 4, wherein the 2-phenylpropane-1,3-diol diglycidyl ether derivatives are 2-phenylpropane-1,3-diol diglycidyl ether derivatives of the formula I

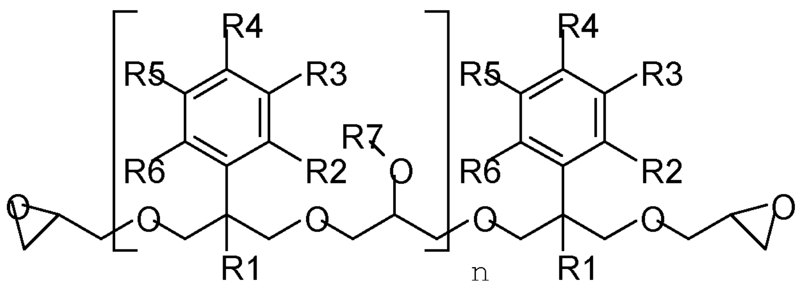

(I),

in which

R1 is an alkyl group or an aryl group,
R2 to R6 are independently a hydrogen atom, an alkyl group having 1 to 4 carbon atoms, a halogen atom or a nitro group,
R7 is a hydrogen atom or a glycidyl group, and
n = 0 to 100,
and alternatively R2 and R3 or R3 and R4 may also each collectively, together with the benzene ring to which they are attached, form a fused aromatic or heteroaromatic system.

6. The method according to claim 5, where

R1 is an alkyl group having 1 to 5 carbon atoms or an aryl group having 6 to 10 carbon atoms,
R2 to R6 are independently a hydrogen atom or an alkyl group having 1 to 4 carbon atoms,
R7 is a hydrogen atom or a glycidyl group, and
n = 0 to 30.

7. The method according to claim 6, where R1 is an alkyl group having 1 to 4 carbon atoms and R2 to R6 are each hydrogen atoms.

8. The method according to any of claims 1 to 7, wherein the aromatic diisocyanate is selected from the group consisting of diphenylmethane 2,2'-diisocyanate, diphenylmethane 2,4'-diisocyanate, diphenylmethane 4,4'-diisocyanate, naphthylene 1,5-diisocyanate, tolylene 2,4-diisocyanate, tolylene 2,6-diisocyanate, diphenylmethane diisocyanate, 3,3'-dimethyldiphenyl diisocyanate, diphenylethane 1,2-diisocyanate, paraphenylene 2,4-diisocyanate, and tetramethylenexylene 2,4-diisocyanate.

9. The method according to any of claims 1 to 8, wherein the reaction is carried out in the presence of a catalyst selected from the group consisting of alkali metal halides, tertiary amines, quaternary ammonium salts, urea compounds, piperidinium compounds, imidazolium compounds, phosphonium compounds, Lewis acids, and complexes of Lewis acids with Lewis bases.

10. The method according to any of claims 1 to 9, wherein the reaction is carried out at a temperature in the range from 140 °C to 240 °C.

11. The method according to any of claims 1 to 10, wherein the reaction is carried out in the presence of the solvent sulfolane.

12. The method according to any of claims 1 to 10, wherein the reaction is carried out in neat form in the melt.

13. A thermoplastic polyoxazolidone obtainable by the method according to any of claims 1 to 12.

14. The use of the thermoplastic polyoxazolidone according to claim 13 in the production of applications selected from coating, film, foam, electrical insulation, laminate, fiber, and shaped body.

15. The use of the thermoplastic polyoxazolidone according to claim 13 as a modifier for thermoplastic materials.

**Revendications**

1. Procédé de préparation d'une polyoxazolidone thermoplastique par réaction catalytique d'un ou plusieurs diisocyanates aromatiques et d'un ou plusieurs diépoxydes, le ou les diépoxydes étant, en totalité ou en partie, des dérivés de l'éther diglycidylique du 2-phényl-1,3-propanediol.

2. Procédé selon la revendication 1, dans lequel, outre un ou plusieurs dérivés de l'éther diglycidylique du 2-phényl-1,3-propanediol, on utilise encore, en tant que diépoxydes, un ou plusieurs éthers diglycidyliques de diols aromatiques.

3. Procédé selon la revendication 1, dans lequel les éthers diglycidyliques de diols aromatiques sont choisis dans le groupe constitué par l'éther diglycidylique du bisphénol A et l'éther diglycidylique du bisphénol F.

4. Procédé selon la revendication 2 ou 3, dans lequel le rapport en poids des dérivés de l'éther diglycidylique du 2-phényl-1,3-propanediol aux éthers diglycidyliques de diols aromatiques est compris dans la plage de 5 : 95 à 95 : 5.

5. Procédé selon l'une des revendications 1 à 4, dans lequel les dérivés de l'éther diglycidylique du 2-phényl-1,3-propanediol sont des dérivés de l'éther diglycidylique du 2-phényl-1,3-propanediol de Formule I

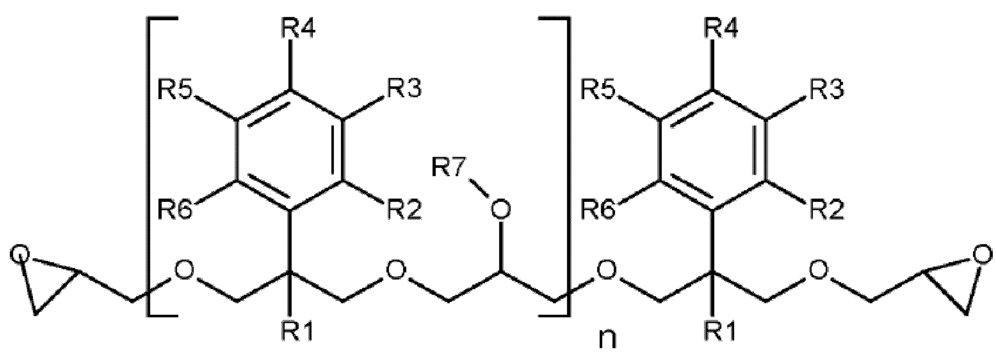

(I)

dans laquelle

R1 représente un groupe alkyle ou un groupe aryle,
R2 à R6 représentent indépendamment les uns des autres un atome d'hydrogène, un groupe alkyle ayant 1 à 4 atomes de carbone, un atome d'halogène ou un groupe nitro,

R7 représente un atome d'hydrogène ou un groupe glycidyle, et
n = 0 à 100,
et, en alternance, R2 et R3, ou R3 et R4, peuvent chacun en commun, conjointement avec le noyau benzénique auquel ils sont liés, peuvent former un radical aromatique ou hétéroaromatique condensé.

**6.** Procédé selon la revendication 5, dans lequel

R1 représente un groupe alkyle ayant 1 à 5 atomes de carbone ou un groupe aryle ayant 6 à 10 atomes de carbone,
R2 à R6 représentent indépendamment les uns des autres un atome d'hydrogène ou un groupe alkyle ayant 1 à 4 atomes de carbone,
R7 représente un atome d'hydrogène ou un groupe glycidyle, et
n = 0 à 30.

**7.** Procédé selon la revendication 6, dans lequel

R1 représente un groupe alkyle ayant 1 à 4 atomes de carbone et
R2 à R6 représentent chacun des atomes d'hydrogène.

**8.** Procédé selon l'une des revendications 1 à 7, dans lequel le diisocyanate aromatique est choisi dans le groupe constitué par le diisocyanate de 2,2'diphénylméthane, le diisocyanate de 2,4'diphénylméthane, le diisocyanate de 4,4'diphénylméthane, le diisocyanate de 1,5-naphtylène, le diisocyanate de 2,4-toluylène, le diisocyanate de 2,6-toluylène, le diisocyanate de diphénylméthane, le diisocyanate de 3,3'-diméthyl-diphényle, le diisocyanate de 1,2-diphényléthane, le diisocyanate de 2,4-paraphénylène et le diisocyanate de 2,4-tétraméthylènexylène.

**9.** Procédé selon l'une des revendications 1 à 8, dans lequel la réaction a lieu en présence d'un catalyseur, choisi dans le groupe constitué par les halogénures de métaux alcalins, les amines tertiaires, les sels de l'ammonium quaternaire, les composés de l'urée, les composés du pipéridinium, les composés de l'imidazolium, les composés du phosphonium, les acides de Lewis et les complexes d'acides de Lewis et de bases de Lewis.

**10.** Procédé selon l'une des revendications 1 à 9, dans lequel la réaction a lieu à une température dans la plage de 140 °C à 240 °C.

**11.** Procédé selon l'une des revendications 1 à 10, dans lequel la réaction a lieu en présence du solvant sulfolane.

**12.** Procédé selon l'une des revendications 1 à 10, dans lequel la réaction a lieu sans solvant à l'état fondu.

**13.** Polyoxazolidone thermoplastique pouvant être obtenue par le procédé selon l'une des revendications 1 à 12.

**14.** Utilisation de la polyoxazolidone thermoplastique selon la revendication 13 pour réaliser des applications choisies parmi un revêtement, une feuille, une mousse, une isolation électrique, un stratifié, une fibre et un objet moulé.

**15.** Utilisation de la polyoxazolidone thermoplastique selon la revendication 13 en tant que modifiant pour des matériaux thermoplastiques.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 8606734 A
- US 3687897 A
- WO 2015173111 A
- DE 102014226838
- WO 2015173110 A
- US 2015073115 A
- WO 2014072216 A